# EUROPÄISCHE PATENTANMELDUNG

(11) **EP 0 786 850 A2**
(43) Veröffentlichungstag der Anmeldung: **30.07.1997**
(21) Anmeldenummer: 97101458.4
(22) Anmeldetag: 30.01.1997
(51) Int. Cl.: H02J 13/00

(54) **Verfahren zum selektiven Schalten und Steuern von Verbrauchern in einem Wechselstromkreis**

(30) Priorität: 02.02.1996 DE 19603680
(71) Anmelder: Ringwald, Eugen, 89081 Ulm (DE)
(72) Erfinder: Ringwald, Eugen, 89081 Ulm (DE)

(57) **Zusammenfassung**

Verfahren zum selektiven Schalten und Steuern von Verbrauchern in einem Wechselstromkreis direkt durch einen oder einige Phasenabschnitte oder Phasenanschnitte.

## Beschreibung

Die Erfindung betrifft ein Verfahren zum Schalten und zum Steuern der Leistungsaufnahme von mindestens einem Verbraucher in einem Stromkreis, in dem Wechselspannung anliegt, bei dem der oder einer der Verbraucher selektiv geschaltet und gesteuert wird, indem im Stromkreis ein Codierer angeordnet und dem Verbraucher oder den Verbrauchern jeweils ein Decodierer vorgeschaltet wird und die Übertragung der Codes über die Stromleitung erfolgt, wobei zum Zwecke der Informationsübertragung zu dem oder einem der Verbraucher einzelne Halbwellen durch Phasenanschnitt verändert werden.

Aus der Patentanmeldung DE 44 31 984 A1 ist ein derartiges Verfahren bekannt, bei dem in aufeinanderfolgenden Sinuswellen Lücken in Form fehlender Halbwellen oder Teilen davon als Marken eingebracht werden. Die Anzahl der Sinuswellen zwischen solchen Marken wird gezählt und ergibt zur Ansteuerung ein serielles digitales Datenwort. Dieses Verfahren ist mit geringem Aufwand auszuführen, hat jedoch den Nachteil, daß die für die Informationsübertragung benötigte, mehrere Wellenzüge umfassende Zeitdauer relativ lang ist, was sich insbesondere dann störend bemerkbar macht, wenn viele Verbraucher im Stromkreis angeordnet sind und nacheinander ein- und ausgeschaltet werden.

In der AT-E 14 055 (entsprechend EP 0 038 877 B2) ist ein Verfahren zur Übertragung von Nachrichten- und Steuersignalen beschrieben, bei dem während mindestens eines Teils bestimmter Halbwellen eine Stromunterbrechung erfolgt und dieses Zeitintervall genutzt wird, um Nachrichten- oder Steuersignale an einzelne oder alle Verbraucher innerhalb des Wechselstrom-Versorgungsnetzes zu übersenden bzw. von diesen zu empfangen. Die Stromunterbrechung dient dabei nicht selber der Informationsübermittelung, sondern soll diese nur möglichst störungsfrei ermöglichen.

Durch EP 0 645 870 A1 ist ein Verfahren zur Informationsübertragung in Leitungsnetzen offenbart, das dazu dient, ein Meßergebnis an eine Empfangseinheit zu senden, wobei das Meßergebnis von einem Sensor erfaßt wird, der Ja-Nein-Unterscheidungen treffen kann, also beispielsweise das Fehlen oder die Präsenz eines Gerätes oder Wertes anzeigen kann. Dazu wird einem elektrischen Signal die Information aufgeprägt, und zwar indem mittels Zener-Dioden mit unterschiedlichen Zener-Spannungen für unterschiedliche Zeiten einer Schwingung diese begrenzt wird. Die Zeitdauer ist charakteristisch für die Zener-Diode, die hinsichtlich des Sensors die Ja-Nein-Entscheidung indiziert.

Der Erfindung liegt die Aufgabe zugrunde, ein Verfahren der eingangs genannten Art so weiterzubilden, daß der Zeitbedarf für die Datenübertragung verringert werden kann.

Diese Aufgabe wird bei einem derartigen Verfahren dadurch gelöst, daß einer Halbwelle einer einzigen Schwingung der Wechselspannung durch den Codierer die Information zum Schalten von dem Verbraucher oder einem der Verbraucher aufgeprägt wird, wobei zur Codierung die Phasen der einen Halbwelle angeschnitten wird und die Zeitdauer des Phasenanschnitts die Information bezüglich der Auswahl des Verbrauchers enthält, und daß zum Steuern der Leistungsaufnahme die Phase der anderen Halbwelle der einen Schwingung anschneidbar ist und die Zeitdauer des Phasenanschnitts die Information bezüglich der Leistungsaufnahme des Verbrauchers enthält.

Bei diesem Verfahren ist die Datenübertragung innerhalb einer Schwingungsdauer abgeschlossen und beansprucht daher, je nach Frequenz der Wechselspannung, in der Regel nur noch wenige Millisekunden. Die Datenübertragung selber erfolgt analog.

Im Rahmen de Erfindung ist gleichfalls vorgesehen, daß anstelle des Phasenanschnitts ein Phasenabschnitt verwendet wird.

Hinsichtlich der Detektierbarkeit eines genau definierten Zeitpunkts ist es günstig, wenn der Zeitpunkt des Beginns des Phasenanschnitts für jede Halbwelle durch den Nulldurchgang bestimmt wird.

In dem weiteren Verfahren gemaß der Erfindung ist vorgesehen, daß die erste Halbwelle die Information bezüglich des auszuwählenden Verbrauchers, die zweite Halbwelle die Information bezüglich der Leistungsaufnahme enthält. Schon anhand der Information in der ersten Halbwelle kann der dem Verbraucher vorgeschaltete Decodierer ermitteln, ob er angesprochen ist. Ist dies der Fall, so kann er auch die Information der zweiten Halbwelle auswerten, die ansonsten von den nicht angesprochenen Decodierern nicht weiter beachtet werden muß. Die erste Halbwelle kann positiv oder negativ sein, wodurch sich die Anzahl der ansprechbaren Decodierer im Stromkreis verdoppelt, da diese Information ebenfalls mit ausgewertet werden kann.

Hinsichtlich einer möglichst kurzen Übertragungsdauer für sämtliche Verbraucher im Stromkreis ist es vorteilhaft, wenn ein Code zum simultanen Schalten aller Verbraucher verwendet wird, wozu dann eine Halbwelle der Schwingung ausreicht. Dann ist es nicht notwendig, daß sukzessive alle Decodierer einzeln angesprochen werden, sondern innerhalb einer Schwingung werden alle Verbraucher ein- bzw. ausgeschaltet. Vorteilhaft ist es auch, wenn ein Code zum simultanen Steuern der Leistungsaufnahme aller Verbraucher verwendet wird, da so durch einen Steuerbefehl alle Verbraucher gleichzeitig auf einen vorbestimmten Wert, der nicht notwendigerweise für alle Verbraucher gleich sein muß und einem Stand-by-Betrieb entsprechen kann, eingestellt werden kann.

Insbesondere wenn viele Verbraucher im Stromkreis angeordnet sind, ist es hinsichtlich der guten Detektierbarkeit der Änderungen der Phasenlage vorteilhaft, wenn für die Zeit der Datenübertragung die Last im Stromkreis abgeschaltet wird.

Eine bevorzugte Vorrichtung zur Durchführung des Verfahrens ist dadurch gekennzeichnet, daß im Wechselstromkreis mit der Stromleitung ein Codierer angeordnet und dem Verbraucher oder den Verbrauchern jeweils ein Decodierer vorgeschaltet ist, daß für den Phasenanschnitt ein Triac vorgesehen ist, und daß die Schaltung für den Codierer und den Decodierer jeweils auf einem Chip als integrierter Schaltkreis ausgebildet ist. Durch die damit verbundene Minituarisierung ergibt sich die Möglichkeit, bei einer Wandinstallation den Codierer innerhalb des durch eine Unterputzdose vorgegebenen Raums unterzubringen. Der Decodierer kann direkt am Verbraucher integriert sein.

Im folgenden soll ein Ausführungsbeispiel der Erfindung anhand der Zeichnung erläutert werden; es zeigen:
- Fig. 1: einen Schwingungszug der Wechselspannung mit zweimaligem Phasenanschnitt einer Vollschwingung, und
- Fig. 2: die schematische Darstellung eines Ausschnitts eines Stromkreises mit Codierer und Decodierer.

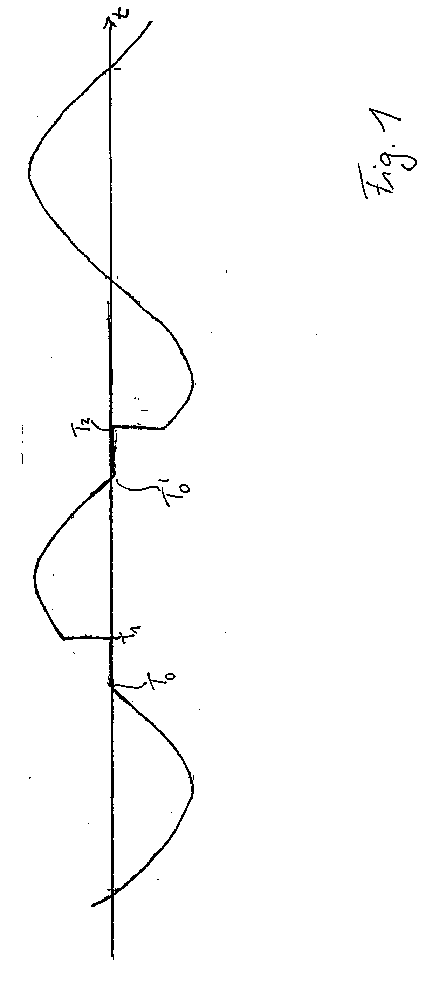

Das Verfahren dient zum Schalten und zum Steuern der Leistungsaufnahme von einem oder mehreren Verbrauchern, die in einem Wechselstromkreis angeordnet sind. Beispielhaft kann diesbezüglich das Ein- und Ausschalten bzw. Dimmen von Lampen 10 in einem Stromkreis angeführt werden, in dem die in Haushalten übliche Spannung von 230 V bei 50 Hz anliegt. Um die Lampen 10 selektiv ein- und ausschalten bzw. dimmen zu können ist im Stromkreis ein Codierer 1 angeordnet, von dem Daten über die Stromleitung 11 zu einem Decodierer 2 übertragen werden, der den Lampen 1 vorgeschaltet ist. Zur Übertragung der Daten wird einer einzigen Schwingung mit zwei Halbwellen der Wechselspannung die Information aufgeprägt, welche Lampe 1 geschaltet bzw. gedimmt werden soll. Die diesbezüglich notwendige Information ist in der Zeitdauer To-T1 bzw To'-T2 enthalten, die durch einen Phasenanschnitt gegeben ist, wobei die Zeitdauer in der einen Halbwelle charakteristisch für den anzusprechenden Decodierer und die Lampe 1 ist, während die Zeitdauer in der anderen Halbwelle die Leistungsaufnahme angibt. In der Fig. 1 ist ein zweimaliger Phasenanschnitt To-T1 bzw To'-T2 gezeigt, wobei der Nulldurchgang jeweils den Startzeitpunkt vorgibt. Ein Phasenabschnitt ist in gleicher Weise einsetzbar. Der Phasenanschnitt wird mittels eines Triacs im Codierer 1 zum Zeitpunkt To bzw. To' des Nulldurchgangs ausgeführt. Nach einer bestimmten Zeitdauer, die einer Lampe 1 zugeordnet ist, erfolgt zum Zeitpunkt T1 die Zündung. Vom Decodierer 2 der betreffenden Lampe 1 wird erkannt, daß dieser angesprochen ist und auch die Informationen aus dem Phasenanschnitt der zweiten Halbwelle ausgewertet, wobei wiederum nach einer Zeitdauer von To' bis zum Zeitpunkt T2 die Zündung erfolgt.

Um den Zündzeitpunkt einwandfrei detektieren zu können, kann bei einer größeren Belastung des Triacs die Last während der Datenübertragung abgeschaltet werden.

Der Triac im Codierer 1 ist im Normalzustand durchgeschaltet, so daß mehrere Codierer 1 in Reihe geschaltet und auch anstelle einer Wechsel- oder Kreuzschaltung eingebaut werden können.

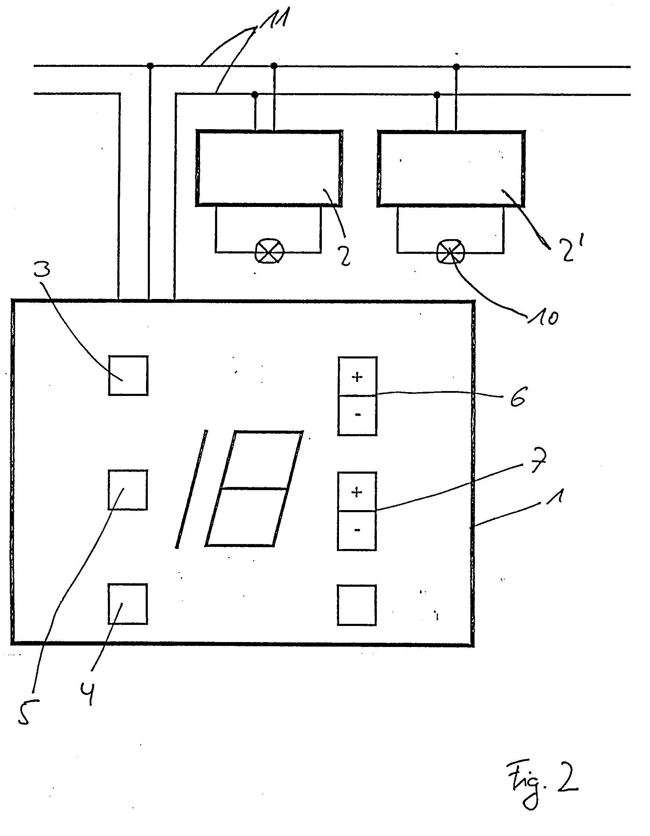

Fig. 2 zeigt eine schematische Darstellung einer Vorrichtung, die einen Codierer 1 und zwei Decodierer 2, 2' enthält. Die Schaltung für den Codierer 1 und den Decodierer 2, 2' ist jeweils auf einem Chip als integrierter Schaltkreis ausgebildet, wodurch deren Abmessungen insgesamt klein ausfallen können. Der Codierer 1 ist in einem Schalter integriert, der beispielsweise in einer Unterputzdose für die Wandinstallation eingesetzt werden kann. An dem Schalter ist eine Taste 3 vorgesehen, mit der alle Lampen 10 gleichzeitig eingeschaltet werden können. Genauso ist ein Schalter 4 vorhanden, der sämtliche Lampen 10 gleichzeitig ausschaltet. Dazu wird jeweils vom Codierer 1 ein Code erzeugt, der alle Decodierer 2, 2' gleichzeitig anspricht. Gleicherweise kann durch eine Taste 5 am Schalter auch ein Code erzeugt werden, mit dem gleichzeitig in sämtlichen Decodierern 2, 2' ein neuer Wert für die Leistungsaufnahme gesetzt wird. So kann beispielsweise eine Voreinstellung abgerufen werden bzw. auf eine Notbeleuchtung umgeschaltet werden. Der Schalter umfaßt weiterhin Tasten 6, mit denen zum selektiven Schalten und Steuern jeweils eine Lampe 10 ausgewählt und durch Dimmertasten 7 gedimmt werden kann. Außerdem weist der Schalter ein Display auf, das die zu übertragende Information bezüglich Lampe und Leistungsaufnahme anzeigt.

Dieses Verfahren kann nicht nur zum Schalten und Dimmen von Lampen ausgeführt werden, die lediglich beispielhaft zur Erläuterung des Verfahrens genannt worden sind. Das Verfahren findet auch Anwendung beim Schalten und Steuern von anderen Verbrauchern, wie beispielsweise Elektromotoren, Widerstandsheizungen.

## Patentansprüche

1. Verfahren zum Schalten und zum Steuern der Leistungsaufnahme von mindestens einem Verbraucher in einem Stromkreis, in dem Wechselspannung anliegt, bei dem der oder einer der Verbraucher selektiv geschaltet und gesteuert wird, indem im Stromkreis ein Codierer (1) angeordnet und dem Verbraucher oder den Verbrauchern jeweils ein Decodierer (2) vorgeschaltet wird und die Übertragung der Codes über die Stromleitung (11) erfolgt, wobei zum Zwecke der Informationsübertragung zu dem Verbraucher oder einem der Verbraucher einzelne Halbwellen durch Phasenanschnitt verändert werden, dadurch gekennzeichnet, daß einer Halbwelle einer einzigen Schwingung der Wechselspannung durch den Codierer (1) die Information zum Schalten von dem oder einem der Verbraucher aufgeprägt wird, wobei zur Codierung die Phase der Halbwelle angeschnitten wird und die Zeitdauer (To-T1) des Phasenanschnitts die Information bezüglich der Auswahl des Verbrauchers enthält, und daß zum Steuern der Leistungsaufnahme die Phase der anderen Halbwelle der einen Schwingung anschneidbar ist und die Zeitdauer (To'-T2) des Phasenanschnitts die Information bezüglich der Leistungsaufnahme des Verbrauchers enthält.

2. Verfahren nach Anspruch 1, dadurch gekennzeichnet, daß anstelle des Phasenanschnitts ein Phasenabschnitt verwendet wird.

3. Verfahren nach einem der Ansprüche 1 oder 2, dadurch gekennzeichnet, daß der Zeitpunkt (To, To') des Beginns des Phasenanschnitts für jede Halbwelle durch den Nulldurchgang bestimmt wird.

4. Verfahren nach einem der Ansprüche 1 bis 3, dadurch gekennzeichnet, daß die erste Halbwelle die Information bezüglich des auszuwählenden Verbrauchers und die zweite Halbwelle die Information bezüglich der Leistungsaufnahme enthält.

5. Verfahren nach einem der Ansprüche 1 bis 4, dadurch gekennzeichnet, daß ein Code zum simultanen Schalten aller Verbraucher verwendet wird.

6. Verfahren nach einem der Ansprüche 1 bis 5, dadurch gekennzeichnet, daß ein Code zum simultanen Steuern der Leistungsaufnahme aller Verbraucher verwendet wird.

7. Verfahren nach einem der Ansprüche 1 bis 6, dadurch gekennzeichnet, daß für die Zeit der Datenübertragung die Last im Stromkreis abgeschaltet wird.

8. Verfahren nach einem der Ansprüche 1 bis 7, dadurch gekennzeichnet, daß bezüglich der Codierung des auszuwählenden Verbrauchers die Information über die Polarität der ersten Halbwelle ausgenutzt wird.

9. Vorrichtung zur Durchführung des Verfahrens nach einem der Ansprüche 1 bis 8, dadurch gekennzeichnet, daß im Wechselstromkreis mit der Stromleitung (11) ein Codierer (1) angeordnet und dem Verbraucher oder den Verbrauchern jeweils ein Decodierer (2) vorgeschaltet ist, daß für den Phasenanschnitt ein Triac vorgesehen ist, und daß die Schaltung für den Codierer (1) und den Decodierer (2) jeweils auf einem Chip als integrierter Schaltkreis ausgebildet ist.
